# EUROPEAN PATENT APPLICATION

(11) **EP 1 731 959 A1**
(43) Date of publication of application: **13.12.2006**
(21) Application number: 05721034.6
(22) Date of filing: 11.03.2005
(51) Int. Cl.: G03B 35/18, G02B 3/00, G02B 27/22, H04N 13/04, G02F 1/13, G02F 1/1333, G02F 1/1335

(54) **STEREOSCOPIC TWO-DIMENSIONAL IMAGE DISPLAY UNIT**

(30) Priority: 31.03.2004 JP 2004107027
(71) Applicant: Pioneer Corporation, Tokyo 153-8654 (JP)
(72) Inventor: TOMISAWA, Isao, PIONEER CORPORATION, Tokorozawa-shi, Saitama 359 8522 (JP); ISHIKAWA, Masaru, PIONEER CORPORATION, Tokorozawa-shi, Saitama 3598522 (JP)
(74) Representative: Skuhra, Udo
(86) International application number: PCT/JP2005/004847
(87) International publication number: WO 2005/098534

(57) **Abstract**

The object of the invention is to improve visibility when a stereoscopic two-dimensional image display apparatus is obliquely installed.

A stereoscopic two-dimensional image display apparatus includes: a display unit 1 having an image display surface 1A displaying a two-dimensional image; and a micro lens array 3 (image transfer panel) that displays a stereoscopic image on a stereoscopic image display surface 2 in space separated from the image display surface 1A by focusing light emitted from the image display surface 1A on the stereoscopic image display surface 2. In the stereoscopic two-dimensional image display apparatus, when a housing 20 provided with the micro lens array 3 is tilted at an angle θ to the stereoscopic image display surface 2, the display unit 1 is tilted at an angle 2θ, which is two times the angle θ, in synchronization with the tilting of the micro lens array 3.

## Description

### Technical Field

The present invention relates to a stereoscopic two-dimensional image display apparatus and a stereoscopic two-dimensional image display method for displaying a stereoscopic two-dimensional image.

### Background Art

Stereoscopic two-dimensional image display apparatuses that stereoscopically display a two-dimensional image on a predetermined imaging surface disposed in space in front of a micro lens array in which micro lenses are arranged at predetermined intervals by disposing the micro lens array in front of a two-dimensional image display surface are known (See, for example, Patent Document 1, Patent Document 2, Patent Document 3, and Patent Document 4).
Patent Document 1: JP-A-2001-255493
Patent Document 2: JP-A-2003-98479
Patent Document 3: JP-A-2002-77341
Patent Document 4: JP-A-2003-156712

When a stereoscopic two-dimensional image display apparatus is used as a display for display purpose, it is preferable to install the stereoscopic two-dimensional image display apparatus to be slightly tilted in order that a viewer can look down at the stereoscopic two-dimensional image display apparatus. When the stereoscopic two-dimensional image display apparatus is installed as described above, viewers can easily view the stereoscopic two-dimensional image display apparatus regardless of differences in height among the viewers, that is, tall adults as well as short children can easily view the stereoscopic two-dimensional image display apparatus. Further, images formed by the stereoscopic two-dimensional image display apparatus can be effectively displayed. In general, since most of deep images are taken in a law of perspective, in order to easily obtain a natural three-dimensional effect or reality, it is preferable to obliquely view the images from the above.

However, if only the housing of the stereoscopic two-dimensional image display apparatus is tilted with the micro lens array and a display unit parallel with each other as in the related art, an image display surface have an angle with respect to a vertical plane. Therefore, objects necessary to be vertically displayed, for example, inanimate objects such as a vase look tilted or fallen over. As a result, viewer can sense a discomfort at such a stereoscopic image.

### Disclosure of the Invention

The problem to be solved is that when the stereoscopic two-dimensional image display apparatus according to the related art is obliquely installed in order to improve visibility, viewers sense a discomfort at displayed stereoscopic images.

In order to solve the above problem, a stereoscopic two-dimensional image display apparatus according to the present invention is characterized by including: a display unit including an image display surface that displays a two-dimensional image; and an image transfer panel that is separated from the image display surface and displays a stereoscopic two-dimensional image by focusing light emitted from the image display surface on a predetermined imaging surface, and characterized in that the image transfer panel is disposed to be tilted with respect to the imaging surface at a first angle that is a predetermined angle, and the display unit is disposed to be tilted with respect to the imaging surface at a second angle in accordance with the predetermined angle.

Also, a method for controlling a stereoscopic two-dimensional image display apparatus according to the present invention is characterized by including steps of: displaying a two-dimensional image on an image display surface of a display unit; displaying a stereoscopic two-dimensional image by focusing light emitted from the image display surface on a predetermined imaging surface through an image transfer panel separated from the image display surface; disposing the image transfer panel so as to tilt at a first angle that is a predetermined angle with respect to the imaging surface; and disposing the display unit so as to tilt at a second angle with respect to the imaging surface in accordance with the first angle.

### Brief Description of the Drawings

Fig. 1 is a perspective view showing the appearance of a stereoscopic two-dimensional image display apparatus according to a first embodiment of the invention.
Fig. 2 is a side sectional view schematically showing the configuration of the stereoscopic two-dimensional image display apparatus according to the first embodiment of the invention.
Figs. 3(a) and 3(b) are views showing the relationship between a housing and a rotation angle of a display unit and more specifically, Fig. 3 (a) shows a state before the housing rotates and Fig. 3(b) shows a state in which the housing is tilted at an angle α to the original state (the state shown in Fig. 3(a)).
Figs. 4(a) to 4(d) are views for explaining the operation of a stereoscopic two-dimensional image display apparatus according to a second embodiment of the invention.
Fig. 5(a) and 5(b) are views schematically showing the configuration of a stereoscopic two-dimensional image display apparatus according to a third embodiment of the invention and more specifically, Figs. 5(a) and 5(b) are side sectional views showing when the tilt angles of housing are different from each other.

In the drawings, reference symbols M and M2 denote stereoscopic two-dimensional image display apparatuses, reference numeral 1 denotes a display unit, reference numeral 1A denotes a image display surface, reference numeral 2 denotes a stereoscopic image display surface (imaging surface), reference numeral 3 denotes a micro lens array (image transfer panel), reference numeral 20 denotes a housing, reference numeral 30 denotes a supporter, reference numeral 54 denotes a tilt angle detecting unit (means for detecting a tilt angle), reference numeral 55 denotes a control device (control means, a control unit), and reference numeral 21 denotes a rotation center.

### Best Mode for Carrying Out the Invention

Hereinafter, a stereoscopic two-dimensional image display apparatus according to an embodiment of the invention will be described with reference to the accompanying drawings.

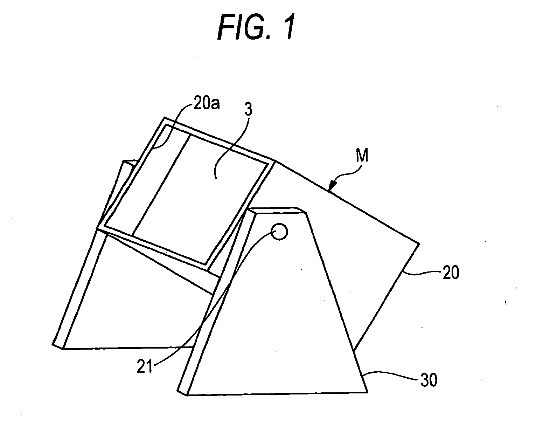

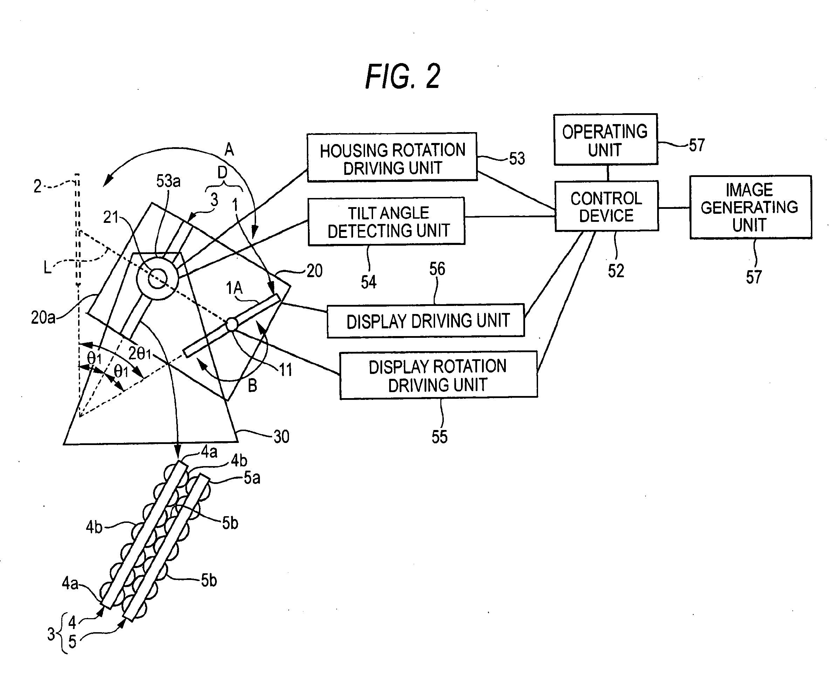

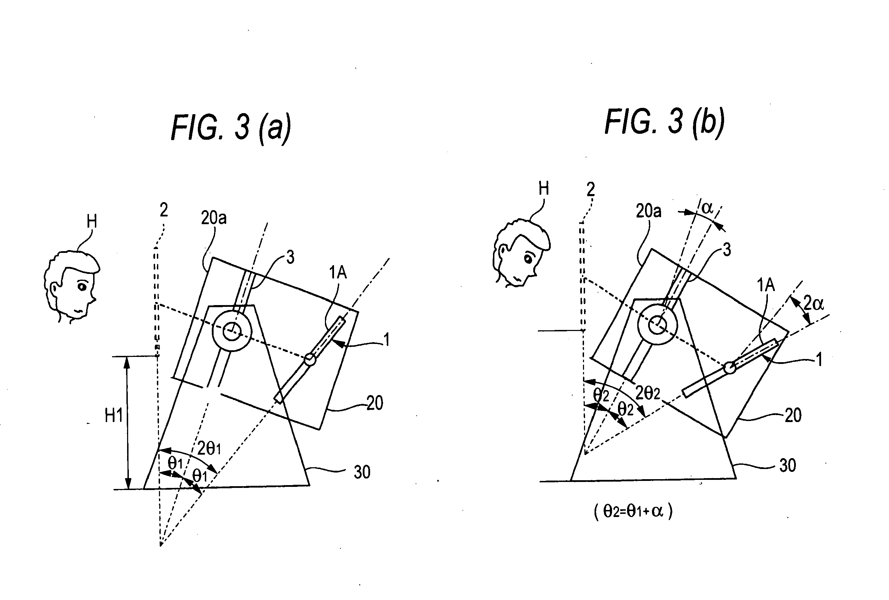

Fig. 1 is a perspective view showing the appearance of a stereoscopic two-dimensional image display apparatus M according to a first embodiment. Fig. 2 is a view schematically showing the configuration of the stereoscopic two-dimensional image display apparatus M according to the first embodiment. Figs. 3(a) and 3(b) are views showing the relationship between a housing and a rotation angle of a display unit. Fig. 3(a) shows an original state, that is, a state of the housing before rotating, and Fig. 3(b) shows a state in which the housing is tilted at an angle α with respect to the original state (the state shown in Fig. 3(a)).

The stereoscopic two-dimensional image display apparatus M according to this embodiment is an image display apparatus stereoscopically displays a two-dimensional image on a predetermined plane (imaging surface) in space so that the two-dimensional image is stereoscopically viewed to a viewer H.

### (Configuration of stereoscopic two-dimensional image display apparatus)

First, the configuration of the stereoscopic two-dimensional image display apparatus according to this embodiment will be described with reference to Figs. 1 and 2.

The stereoscopic two-dimensional image display apparatus M includes a housing 20, a display unit 1 emitting light corresponding an image, an image transfer panel composed of a micro lens array 3 condenses the light emitted from the display unit 1 and projects the condensed light, and supporters 30 supporting the housing 20.

The housing 20 is a box-shaped case provided with an opening 20a formed at one end thereof and contains the display unit 1 and the micro lens array 3 therein. Supporting shafts 21 are provided at substantially center portions in the height direction of the housing 20 on both sides of the housing 20, respectively. The housing 20 is supported by the supporters through the supporting shafts 21 to be capable of being tilted in a vertical direction (a direction indicated by an arrow A, that is, a direction of rotation on an axis between the supporting shafts.

The display unit 1 is a two-dimensional display device provided in the housing 20. The display unit 1 is composed of a general display, such as a liquid crystal display, an EL panel, or a CRT and displays images on an image display surface 1A according to a driving signal of a display drive unit 56, which will be described below. As a result, light according to an image is emitted from the image display surface 1A. In Fig. 2, in order to reduce the thickness of the stereoscopic two-dimensional image display apparatus, a panel display, such as a liquid crystal display or an EL panel is used as the image display surface 1A.

The display unit 1 is disposed at a position in the rear portion of the housing 20 separated from the supporting points 21. The display unit 1 is mounted in the housing 20 in a state where the surface center of the display unit 1 matches to the center axis line L of the housing 20 to be capable of rotating around a substantially horizontal rotation axis perpendicular to the center axis line L of the housing 20 in the vertical direction (a direction indicated by an arrow B).

The micro lens array 3 is disposed in the housing 20 at a predetermined distance in front of the image display surface 1A of the display unit 1. The micro lens array 3 functions to stereoscopically displays a two-dimensional image on an imaging surface 2 by focusing light emitted from the image display surface 1A on the imaging surface 2 in space that is positioned at a determined distance in front of the micro lens array. In this description, the imaging surface where an image displayed on the image display surface 1A is created in space is referred to as a stereoscopic image display surface.

As shown in Fig. 2, the micro lens array 3 is composed of two lens array half bodies 4 and 5 attaching each other in the thickness direction thereof. The lens array half bodies 4, 5 include transparent substrates 4a, 5a formed of glass or resin with high transmittance, and a plurality of micro convex lenses 4b, 5b that have the same radius of curvature and are disposed on both surfaces of the transparent substrate 4a, 5a in a matrix to be adjacent to one another, respectively. The optical axis of each micro convex lens 4b, 5b formed on one of both surfaces of the transparent substrate 4b, 5b is adjusted to be the same as or parallel with the optical axis of micro convex lenses 4b, 5b formed at a corresponding position on the other surface of the transparent substrates 4b, 5b. Further, the optical axes of each pair of the adjacent micro convex lenses 4b and 5b between the micro array half bodies 4 and 5 are adjusted to be the same as or parallel with each other. In this embodiment, an operating distance of the micro lens array 3 toward the rear side (the image display surface 1A side) of the housing 20 is set to be the same as an operating distance of the micro lens array toward the opening 20a side (the imaging surface 2 side) of the housing 20. The radiuses of curvature of the lenses of the micro lens array 3 may be different. Further, the operating distance of the micro lens array 3 toward the rear side of the housing may be different from the operating distance of the micro lens array 3 toward the opening side.

The micro lens array 3 is provided on a plane including a line connecting the supporting shafts 21, that is, a center of tilting of the housing 20. Further, the micro lens array 3 and the image display surface 1A of the display unit 1 are provided at positions separated from each other by a predetermined distance (the operating distance of the micro lens array 3). The surface center of the micro lens array 3 substantially matches the center axis line L of the housing 20 and the micro lens array 3 is fixed to the housing 20 in position perpendicular to the center axis line L of the housing 20 and thus cannot rotate. Therefore, the micro lens array 3 is tilted at the same angle as the housing 20 in response to tilting of the housing 20.

In the stereoscopic two-dimensional image display apparatus M, it is preferable to provide the stereoscopic image display surface (imaging surface) 2 in a plane perpendicular to a ground plane. In order to the stereoscopic image display surface 2 in a plane perpendicular to a ground plane, the display unit 1 may be mounted in the housing 20 so that both of an angle between a vertical plane including the stereoscopic image display surface 2 and a plane parallel with the micro lens array 3 and an angle between the plane parallel with the micro lens array 3 and a plane including the image display surface 1A of the display unit 1 are "θ".

In other words, it is preferably to dispose the micro lens array 3 to be tilted at the angle θ with respect to the vertical plane and then to dispose the image display surface 1A of the display unit 1 to be tilted at the angle θ with respect to the micro lens array 3. When the micro lens array 3 is mounted as described above, as seen in the cross-sectional view of Fig. 2, the vertical plane including the stereoscopic image display surface 2, the plane including the image display surface 1A of the display unit 1, and the center axis line L connecting the centers of the rotation shaft 11, the supporting shafts 21, and the stereoscopic image display surface 2 form an isosceles triangle. In the isosceles triangle, two oblique lines are in the vertical plane and the plane including the image display surface 1A, respectively, and the base is the center axis line L. In the above-mentioned relationship, a plane including the micro lens array 3 becomes a median line of the isosceles triangle in the cross-sectional view.

In the stereoscopic two-dimensional image display apparatus M according to this embodiment, an image created on the stereoscopic image display surface 2 is a two-dimensional image. When the two-dimensional image has depth or when the inside of the housing is painted in dark color or a background image on the display unit 1 is a black image to enhance contrast, the image is displayed as an image floating in space. Therefore, the image looks like a stereoscopic image to the viewer H in front thereof. In this description, a two-dimensional image displayed on the stereoscopic image display surface 2 is referred to as a stereoscopic two-dimensional image.

As described above, in this embodiment, the display unit 1 and the micro lens array 3 forms a stereoscopic image display unit D that displays a stereoscopic image by focusing light corresponding to an image on the stereoscopic image display surface 2.

### (Regarding to Control Circuit)

Next, a control circuit of the stereoscopic two-dimensional image display apparatus M according to this embodiment will be described with reference to Fig. 2.

The stereoscopic two-dimensional image display apparatus M according to this embodiment includes an operating unit 51, a control device 52, a housing rotation driving unit 53, a tilt angle detecting unit 54, a display rotation driving unit 55, a display driving unit 56, and an image generating unit 57.

The operating unit 51 is an operating terminal operated by the viewer H that watches two-dimensional images displayed on the stereoscopic image display surface 2 by using the stereoscopic two-dimensional image display apparatus M or an operator supporting viewers (hereinafter, referred to as an operator). The operator can input an image display instruction signal requiring execution of displaying image, a housing tilting instruction signal instructing tilting of the housing, etc. to the stereoscopic two-dimensional image display apparatus M through the operating unit 51.

The control device 52 is a control unit operating the stereoscopic two-dimensional image display apparatus M in accordance with various kinds of instruction input through the operating unit 51. In this embodiment, According to an image display instruction signal input through the operating unit 51, the control device 52 drives the display driving unit 56 and the image generating unit 57. According to a housing tilting instruction signal input through the operating unit 51, the control device 52 drives the housing rotation driving unit 53 and the display rotation driving unit 55 to tilt the housing 20 with respect to the supporters 30.

The housing rotation driving unit 53 is a tilting mechanism for tilting the housing 20 according to the housing tilting instruction signal inputted through the operating unit 51. More specifically, the housing rotation driving unit 53 drives a driving motor 51a mounted in the housing 20 according to an instruction of the control device 52 to rotate the housing 20 around the supporting shafts 21 in the arrow A direction.

The tilt angle detecting unit 54 detects the tilt angle of the housing 20 and outputs the detected angle to the control device 52.

The display rotation driving unit 55 is a rotation mechanism for rotating the display unit 1 according to an instruction of the control device 52. In this embodiment, the display unit 1 rotates according to rotation of the housing rotation driving unit 53.

More specifically, when the tilt angle detecting unit 54 detects that the housing has been tilted according to a housing tilting instruction signal input through the operating unit 51, the control device 52 outputs a tilting instruction to the display rotation driving unit 55. The display rotation driving unit 55 rotates the display unit 1 according to the tilting signal so as to change the direction of the display surface 1A.

Here, the control device 52 controls the display rotation driving unit 55 such that, when the housing is tilted at an angle α to an original state, the display unit 1 is tilted at an angle 2α, which is two times the angle α, to the original state, as shown in Figs. 3 (a) and 3(b). In this embodiment, even though the housing 20 has been tilted, the stereoscopic image display surface 2 is always formed in the same vertical surface. In order to satisfy this relationship, in the cross-sectional view, it is preferable that in the isosceles triangle having the vertical plane including the stereoscopic image display surface 2 as one oblique side, the display unit 1 is disposed along the other oblique side. Referring to the geometric relationship between two isosceles triangles before and after tilting, it is preferable to control the display rotation driving unit 55 such that, when the housing 20 is tilted at the angle α to the supporters 30, the display unit 1 is tilted at the angle 2α, which is two times the angle α, with respect to the supporters 30.

Here, when the housing 20 is tilted at the angle α to the supporters 30, the display unit 1 rotates around the supporters 30 together with the housing 20 by the angle α. Therefore, the display rotation driving unit 55 rotates the display unit 1 with respect to the housing 20 by the angle α in the same scale as the change in the angle of the housing 20. That is, the display unit 1 totally rotates around the supporters 30 by the angle 2α.

In other words, in this embodiment, the tilt angle detecting unit 54, the control device 52, and the display rotation driving unit 55 constitutes a synchronous unit for rotating the display unit 1 according to the tilt angle of the housing 20 (micro lens array 3).

The display driving unit 56 is an image display driving unit that displays an image on the image display surface 1A of the display unit 1 according to an image signal or an image signal transmitted from the control device 52.

The image generating unit 57 is for generating an image signal or an video signal corresponding to an image or an video in the display unit 1 and is configured to generate an image according to, for example, a predetermined program. The image generating unit 57 may be configured to store an image or a video in advance and to output the stored image or image to the control device 52 according to an instruction of the control device 52.

Next, the operation of the stereoscopic two-dimensional image display apparatus M according to this embodiment will be described with reference to Fig. 2.

For example, when the operator pushes an image display switch (not shown) provided to the operating unit 51, the operating unit 51 outputs an image display instruction signal to the control device 52. The control device 52 instructs the image generating unit 57 to generate an image or a video to be display in accordance with the image display instruction signal. Then, the image generating unit 57 generates an image signal or a video signal according to the instruction of the control device 52 and outputs the generated image signal or video signal to the display driving unit 56. The display driving unit 56 drives the display unit 1 according to the received image signal or video signal to display an image or a video on the image display surface 1A of the display unit 1.

Light corresponding to the image or video displayed on the image display surface 1A is emitted and passes through the micro lens array 3 such that the image or video is displayed on the stereoscopic image display surface 2. The stereoscopic image display surface 2 is set to a surface positioned at a substantially constant position in the vertical plane as seen from the viewer H. A two-dimensional image displayed on the stereoscopic image display surface 2 looks like a stereoscopic image displayed in space for the viewer.

When the operator pushes an angle switch (not shown) for tilting the housing 20 provided to the operating unit 51, the operating unit 51 outputs a housing tilting instruction signal to the control device 52. When receiving the housing tilting instruction signal, the control device 52 drives the housing rotation driving unit 53 to tilt the housing by an assigned angle (for example, the angle α) and receives data on the rotating angle of the housing 20 from the tilt angle detecting unit 54. Then, the control device 52 outputs the angle data output by the tilt angle detecting unit 54 to the display rotation driving unit 55. The display rotation driving unit 55 further rotates the display unit 1 by the rotating angle of the housing 20 such that the display unit 1 is tilted at an angle that is two times the rotating angle of the housing.

By the above-mentioned tilting, for example, when the housing 20 is further tilted upward, as shown in Figs. 3(a) and 3(b), the height from the ground surface of the supporters 30 to the lower end of the stereoscopic image display surface 2 changes from H1 to H2 and the position of the image is parallel-displaced vertically upward. Therefore, it is possible to always display the center of the stereoscopic image display surface 2 on the center axis line L of the housing 20 according to the direction of the opening 20a.

The stereoscopic two-dimensional image display apparatus M according to this embodiment having the above-mentioned configuration can change the height of the displayed stereoscopic two-dimensional image by varying the direction of the opening 20a after freely changing the angle of the housing 20 if necessary. Further, in this embodiment, when the angle of the housing 20 is changed by α, the angle of the display unit 1 is changed by the angle 2α, which is two times the angle α, in the same direction as the housing 20. For this reason, it is possible to always vertically parallel-displace the stereoscopic image display surface 2 in the vertical plane.

Therefore, when the stereoscopic two-dimensional image display apparatus M is installed at a height where the viewer look down the stereoscopic two-dimensional image display apparatus M and the housing 20 is tilted at an appropriate angle according to the height of the viewer' s eyes, the viewers H can easily see the stereoscopic image display surface 2 regardless of age or height. Further, since most of images having depth is taken in a law of perspective, the stereoscopic two-dimensional image display apparatus M according to this embodiment have the viewers obliquely look down the two-dimensional image stereoscopically displayed on the stereoscopic image display surface 2 formed in the vertical plane such that the image on the stereoscopic image display surface 2 looks like a real and natural stereoscopic image.

When an image of an object, such as a vase, which should vertically stand is displayed, as in the related art, if the stereoscopic image display surface 2 displaying the stereoscopic image display is tilted according to tilting of the stereoscopic two-dimensional image display apparatus, the viewer H may not recognize that the vase vertically stands. However, in the stereoscopic two-dimensional image display apparatus M, when the micro lens array 3 is tilted by the angle α, the display unit 1 is tilted by the angle 2α according to the tilting of the micro lens array 3. As a result, the stereoscopic image display surface 2 displaying the stereoscopic image becomes a vertically standing surface. Therefore, the viewers can see the stereoscopic image of objects, such as a vase, without feeling a sense of discomfort.

When the viewer obliquely looks down the stereoscopic image displayed on the vertically standing stereoscopic image display surface 2 different from when the viewer is faced with a two-dimensional image, since the position to which eyes are focused is scattered over a certain range in the direction reverse to the eye graze direction. Therefore, it is easy to focus eyes on a part of the image. Once human's eyes focuses on a part, they can easily focus on other parts. Therefore, it is possible to easily grasp the whole image. In other words, when the viewer obliquely looks down the stereoscopic image displayed on the vertical stereoscopic image display surface 2, the viewer's eyes easily focus on the stereoscopic two-dimensional image. Therefore, visibility is improved.

As described above, according to the stereoscopic two-dimensional image display apparatus M according to this embodiment, the viewer can easily see a two-dimensional image as a quite natural stereoscopic image regardless of height of the viewer.

### (Second embodiment)

Next, a stereoscopic two-dimensional image display apparatus according to a second embodiment of the invention will be described.

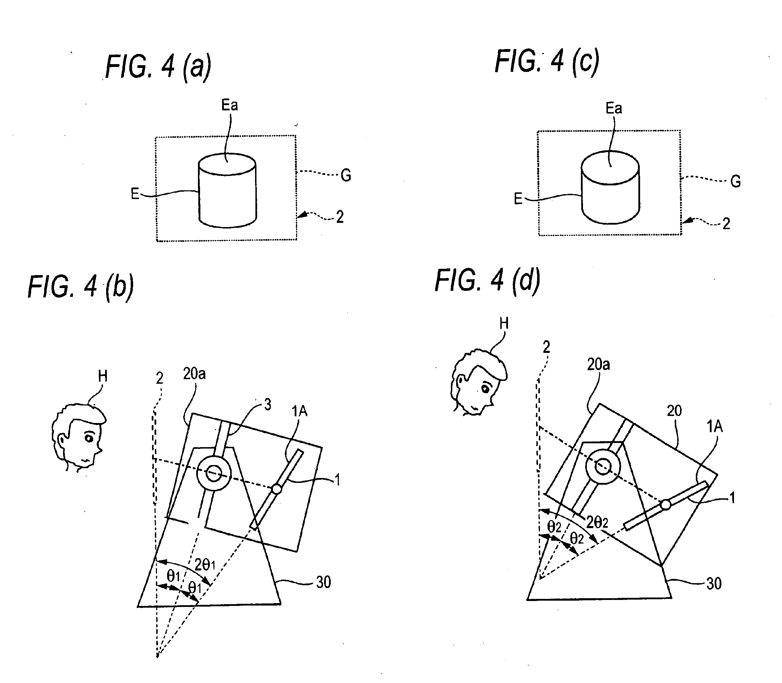

Figs. 4(a) to 4(d) are views for explaining the operation of a stereoscopic two-dimensional image display apparatus according to a second embodiment. Fig. 4(a) is a view showing an image displayed on the stereoscopic image display surface 2 before tilting the housing 20. Fig. 4(b) is a view showing the arrangement angle of the housing 20 when the image shown in Fig. 4 (a) is displayed. Fig. 4 (c) is a view showing an image displayed on the stereoscopic image display surface 2 after tilting the housing 20. Fig. 4(d) is a view showing the arrangement angle of the housing 20 when the image shown in Fig. 4(c) is displayed.

Stereoscopic two-dimensional image display apparatus M according to the second embodiment (since hardware configuration is same as the first embodiment, the apparatus are denoted by the same reference numerals), is configured so that the stereoscopic two-dimensional image displayed on the stereoscopic image display surface 2 varies, for example, from the image shown in Fig. 4(a) to the image shown in Fig. 4(c) according to the tilt angle of the housing 20, in addition to the configuration according to the first embodiment.

In other words, as described with reference to Fig. 2, in this embodiment, the image generating unit 57 generates different images according to the tilt angle α of the housing 20 detected by the tilt angle detecting unit 54. The image generated by the image generating unit 57 is displayed on the image display surface 1A of the display unit 1 through the control device 52 and the display driving unit 56.

In this case, for example, as shown in Figs. 4(a) and 4 (c), when a cylinder E is displayed on the stereoscopic image display surface 2 a display image G, as the tilt of the housing 20 increases, the position of a view point gradually moves upward and an image in which the top surface Ea of the cylinder E appears larger is generated. In this way, as the housing 20 is tilted from the position shown in Fig. 4(b) to the position shown in Fig. 4(d), in the image displayed on the stereoscopic image display surface 2, the top surface Ea of the cylinder E appears gradually larger. Therefore, when looking in the image from the upside, the viewer H can actually see the stereoscopic image of the cylinder E.

As described above, in the stereoscopic two-dimensional image display apparatus M according to this embodiment, the image in which the position of the view point varies according to the tilt of the housing 20 is generated and the generated image is displayed on the stereoscopic image display surface 2. Therefore, it is possible to display a natural image according to the tilt of the housing 20 on the stereoscopic image display surface 2 and the viewer takes the two-dimensional image displayed on the stereoscopic image display surface 2 as a more real stereoscopic image.

### (Third embodiment)

Next, a stereoscopic two-dimensional image display apparatus according to a third embodiment of the invention will be described.

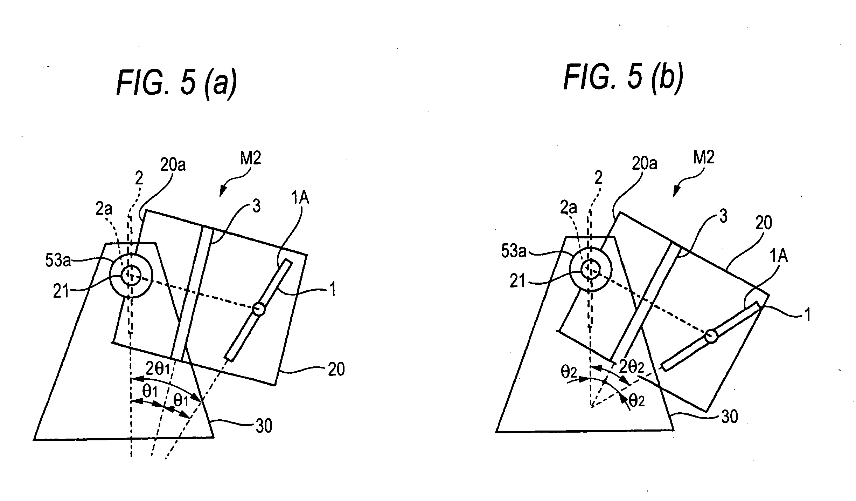

Fig. 5 is a view showing the configuration and operation of the stereoscopic two-dimensional image display apparatus according to the third embodiment of the invention.

The stereoscopic two-dimensional image M2 according to the third embodiment has basically the same configuration as the stereoscopic two-dimensional image display apparatus M according to the first embodiment except that the center position 2a of the stereoscopic image display surface 2 in the height direction thereof is formed on the rotation center 21 (supported points) of the housing 20 by disposing the micro lens array 3 on the more rear side of the inside of the housing 20 as compared to the stereoscopic two-dimensional image display apparatus M according to the first embodiment.

In the stereoscopic two-dimensional image display apparatus having the above-mentioned configuration according to this embodiment, the stereoscopic image display surface 2 is formed in the vertical plane passing through the rotation center 21 of the housing 20 and the center position 2a of the stereoscopic image display surface 2 in the height direction thereof is always formed on the rotation center 21 (supporting points) of the housing 20. In other words, in this embodiment, as described above, the housing 20 is tilted around a point (rotation center 21) on the stereoscopic image display surface 2, thereby capable of preventing the image on the stereoscopic image display surface 2 from moving according to the tilt angle of the housing 20.

Therefore, according to this embodiment, even though the tilt angle of the housing 20 continuously changes, the position of the stereoscopic image display surface does not move vertically. As a result, it is possible to see the stereoscopic image without feeling a sense of discomfort. Even in this case, as shown in the second embodiment, it is possible to change the visibility of the image in a state of fixing the image at a predetermined position by changing the image displayed by the display unit 1 according to the tilt angle of the housing 20.

Further, in this embodiment, the case capable of continuously and freely adjust the tilt angle of the housing 20 has been described. However, the tilt angle may be stepwisely fixed to several angles or may be fixed to one angle. In other words, the housing 20 may be tilted by a predetermined angle on the supporters 30 and then be fixed. In this case, the micro lens array 3 may be tilted at an angle θ with respect to the vertical plane including the imaging surface (stereoscopic image display surface 2) and the display unit 1 may be tilted at an angle 2θ, which is two times the angle θ, to the vertical plane.

In each embodiment, the tilt angle of the housing 20 and the tilt angle of the display unit 1 are electrically controlled. However, the invention is not limited thereto. A synchronizing unit for controlling a ration between the tilt angle of the housing 20 and the tilt angle of the display unit 1 to be in a ratio as θ and 2θ may be formed of a mechanical transfer mechanism. Alternatively, the viewer H may manually tilt the housing without operating the operating unit 51 to push the angle switch.

Further, in each embodiment, the housing 20 and the display unit 1 are tilted upward and downward. However, the housing 20 and the display unit may be tilted rightward and leftward. The tilting direction does not have any limit.

Furthermore, in each embodiment, the micro lens array 3 is a micro convex lens plate made by integrating the pair of lens array half bodies 4 and 5. However, the invention is not limited thereto. The micro lens array 3 may be formed by one body or three or more bodies. However, in the case of inverting images formed by the individual lens constituting the micro lens array and displaying the inverted images, the micro lens array may be configured to individually assign the lens to display pixels of the image display surface 1A of the display unit 1 and the control device 52 or the display driving unit 56 may configured to invert an image signal in advance and display an image according to the inverted image signal on the image display surface 1A of the display unit 1.

The application is based on Japanese Patent Application No. 2004-107027, filed March 31, 2004, the entire contents of which are incorporated herein by reference.

## Claims

1. A stereoscopic two-dimensional image display apparatus **characterized by** comprising:
a display unit including an image display surface that displays a two-dimensional image; and
an image transfer panel that is separated from the image display surface and displays a stereoscopic two-dimensional image by focusing light emitted from the image display surface on a predetermined imaging surface,
wherein the image transfer panel is disposed to be tilted with respect to the imaging surface at a first angle that is a predetermined angle, and
wherein the display unit is disposed to be tilted with respect to the imaging surface at a second angle in accordance with the predetermined angle.

2. The stereoscopic two-dimensional image display apparatus according to claim 1, **characterized in that** the image transfer panel consist of a micro lens array.

3. The stereoscopic two-dimensional image display apparatus according to claim 1 or 2, **characterized by** further comprising:
a housing that tiltably supports the image transfer panel and the display unit, with respect to the imaging surface; and
a synchronizing unit that associates the first angle and the second angle with each other.

4. The stereoscopic two-dimensional image display apparatus according to claim 3, **characterized in that**
the image transfer panel is unrotatably attached to the housing,
the display unit is rotatably attached to the housing, and
the synchronizing unit controls synchronization between tilting of the housing and rotating of the display unit.

5. The stereoscopic two-dimensional image display apparatus according to claim 4, **characterized in that** a rotation center of the housing is disposed on the imaging surface.

6. The stereoscopic two-dimensional image display apparatus according to claim 4 or 5, **characterized in that**
the synchronizing unit includes:
a detector that detects a tilt angle of the housing; and
a controller that controls the rotation of the display unit in accordance with the tilt angle.

7. The stereoscopic two-dimensional image display apparatus according to any one of claims 1 to 6, **characterized in that** the imaging surface is set as a surface along a vertical plane.

8. The stereoscopic two-dimensional image display apparatus according to any one of claims 1 to 7, **characterized by** further comprising a display control unit that varies the two-dimensional image displayed on the image display surface, in accordance with the first angle and the second angle so as to change the stereoscopic two-dimensional image displayed on the predetermined imaging surface.

9. The stereoscopic two-dimensional image display apparatus according to any one of claims 1 to 8, **characterized in that** the second angle is approximate two times the first angle.

10. A method for controlling a stereoscopic two-dimensional image display apparatus, the method **characterized by** comprising steps of:
displaying a two-dimensional image on an image display surface of a display unit;
displaying a stereoscopic two-dimensional image by focusing light emitted from the image display surface on a predetermined imaging surface through an image transfer panel separated from the image display surface;
disposing the image transfer panel so as to tilt at a first angle that is a predetermined angle with respect to the imaging surface; and
disposing the display unit so as to tilt at a second angle with respect to the imaging surface in accordance with the first angle.
